# EUROPÄISCHE PATENTSCHRIFT

(11) **EP 2 065 142 B1**
(45) Veröffentlichungstag und Bekanntmachung des Hinweises auf die Patenterteilung: **01.01.2020**
(21) Anmeldenummer: 08105741.6
(22) Anmeldetag: 06.11.2008
(51) Int. Cl.: B25F 5/02, B25D 17/04

(54) **Handwerkzeugmaschine mit Zusatzhandgriff mit Spannband**
Hand tool having an auxiliary handle with tightening strap
Outil avec poignée additionelle avec bande tensionée

(30) Priorität: 28.11.2007 DE 102007047881
(43) Veröffentlichungstag der Anmeldung: 03.06.2009
(73) Patentinhaber: HILTI Aktiengesellschaft, 9494 Schaan (LI)
(72) Erfinder: Keller, Valentin, 86156 Augsburg (DE); Schilling, Pascal, 82110 Germering (DE); Ludwig, Manfred, 86899 Landsberg (DE); Hofbrucker, Thomas, 82291 Mammendorf (DE)
(74) Vertreter: Hilti Aktiengesellschaft Corporate Intellectual Property

(56) Entgegenhaltungen:
- EP-A- 0 132 593
- EP-A- 0 249 037
- EP-A- 1 832 397
- CH-A5- 661 241
- DE-A1- 3 829 801
- DE-A1- 4 406 718
- DE-A1-102005 057 269
- DE-U1-202006 020 017
- FR-A- 2 620 369
- US-A- 4 276 675
- US-A1- 2007 212 991

## Beschreibung

Die Erfindung bezeichnet eine Handwerkzeugmaschine mit einem Zusatzhandgriff mit einem Spannband, insbesondere einem Bohrhammer 1bz, gemäß dem Oberbegriff von Anspruch 1 und wie aus CH 661 241 A5 und DE 4406718 A1 bekannt.

EP 0249037 A2 und DE 202006020017 U1 beschreiben Zusatzgriffe, die eine starre, zweiteilige Schelle zum Befestigen am Hals einer Handwerkzeugmaschine beschreiben. Die Schelle ist an der Innenseite mit Nocken versehen, welche in entsprechende Vertiefungen an dem Hals eingreifen, um den Zusatzgriff gegenüber Verdrehen zu sichern.

Üblicherweise wird ein Zusatzhandgriff mit einer Klemme oder einer Spannschelle oder einem Spannband am zylindermantelförmigen Spannflansch einer Handwerkzeugmaschine haftreibkraftschlüssig festgelegt. Oft ist an diesem Zusatzhandgriff auch noch ein Tiefenanschlag in Form eines eigensteifen, versetzbar festlegbaren Stabes angeordnet.

Nach der EP0132593 ist ein Zusatzhandgriff bekannt, der über ein durch Drehversetzung des Griffteils mittels einer Spannschraube verspannbares, schlingenförmiges Spannband am Spannflansch einer Handwerkzeugmaschine festgelegt werden kann und ein zum Spannflansch formschlüssig passendes Kopfteil aufweist, das bei zweckentsprechender Festlegung zur Drehachse der Handwerkzeugmaschine orientiert ist. Zusätzlich ist im Kopfteil ein Tiefenanschlag formschlüssig axial versetzbar festlegbar geführt. Das Spannband wird mit seiner Schlinge direkt an V-förmigen Führungsflächen des Kopfteils geführt. Dadurch kann es bei einer weiten Öffnung der Schlinge zu einem Aushaken der am Kopf der Spannschraube formschlüssig geführten Mitnahmeöffnungen der Enden des Spannbandes kommen.

Zudem ist nach der DE102005057269 ein Zusatzhandgriff mit einer Spannschelle bekannt, die teilweise umlaufende Führungsstege aufweist, welche am zugeordneten zylindermantelförmigen Spannflansch einer Handwerkzeugmaschine axial formschlüssig in eine umlaufende Führungsnut eingreifen. Zudem weist die Spannschelle stirnseitig offene Ausnehmungen auf, in denen umlaufend verteilt angeordnete Passnasen tangential formschlüssig eingreifen. Im Ergebnis ist der verspannte Zusatzhandgriff zusätzlich zur haftreibkraftschlüssigen Verspannung auch formschlüssig vollständig festgelegt.

Die Auggabe der Erfindung besteht in einer weiteren Realisierung einer für den rauen Einsatz im Baugewerbe geeigneten vollständig formschlüssigen Festlegung des Zusatzhandgriffs an einer Handwerkzeugmaschine.

Die Aufgabe wird im Wesentlichen durch die Merkmale des Anspruchs 1 gelöst. Vorteilhafte Weiterbildungen ergeben sich aus den Unteransprüchen.

So weist eine Handwerkzeugmaschine mit einem Spannflansch einen daran befestigbaren Zusatzhandgriff auf, der mit seinem Kopfteil zur Arbeitsachse orientiert festlegbar ist, in welchem ein darin geführtes schlingenförmiges Spannband vorhanden ist, das über ein Verspannmittel manuell verspannbar ist, wobei am Spannband zumindest eine nach radial innen auskragende Nocke ausgeformt ist, die in eine zugeordnete Ausnehmung an dem Spannflansch formschlüssig eingreifbar ist.

Durch die nach radial innen auskragende Nocke wird zusätzlich zur haftreibkraftschlüssigen Verspannung auch eine formschlüssige Festlegung am Spannflansch vorgenommen.

Vorteilhaft sind mehrere, längs der Schlinge des Spannbandes versetzte Nocken vorhanden, wodurch die formschlüssige Festlegung höhere Kräfte aufnehmen kann.

Vorteilhaft sind zumindest zwei verschiedene Arten von Nocken vorhanden, weiter vorteilhaft quer zur Schlinge längliche Quernocken, längs zur Schlinge längliche Längsnocken oder kreisförmige Kugelkappennocken, wodurch (bezüglich des Spannflansches) sowohl ein axialer als auch ein tangentialer Formschluss erzielt werden kann, ohne die Biegesteifigkeit des Spannbandes längs der Schlinge zu erhöhen.

Vorteilhaft besteht das Spannband aus Metall, weiter vorteilhaft aus Federstahl, wodurch bei hoher Elastizität eine hohe Spannkraft aufbringbar ist. Zudem sind in Metall ausgeprägte Nocken hochverschleissfest und somit dauerhaft ausgeprägt.

Vorteilhaft ist das Verspannmittel ein drehversetzbares Griffteil, das über eine Spannschraube das Spannband verspannt, wodurch die Verspannung intuitiv einfach über eine Verdrehung erfolgt.

Vorteilhaft weist das Spannband an den beiden Enden je eine Mitnahmeöffnung auf, die einen Kopf der Spannschraube formschlüssig umfassen, wodurch das Spannband durch die Schraube verspannbar ist.

Vorteilhaft weist das Spannband an den beiden Enden je eine nach radial aussen abragende Führungsnase auf, wodurch beim Lösen der Verspannung die Öffnungsweite der Enden des Spannbandes direkt über Führungsflächen vorgegeben ist. Insbesondere kann verhindert werden, dass sich beim Öffnen die Mitnahmeöffnungen von dem Kopf der Spannschraube lösen.

Die Erfindung wird bezüglich eines vorteilhaften Ausführungsbeispiels näher erläutert mit
- Fig. 1: als Handwerkzeugmaschine mit einem Zusatzhandgriff,
- Fig. 2: als Querschnitt in Ebene II-II aus Fig. 1
- Fig. 3: als Spannflansch
- Fig. 4: als Ausschnitt der Schlinge des Spannbandes in Perspektive

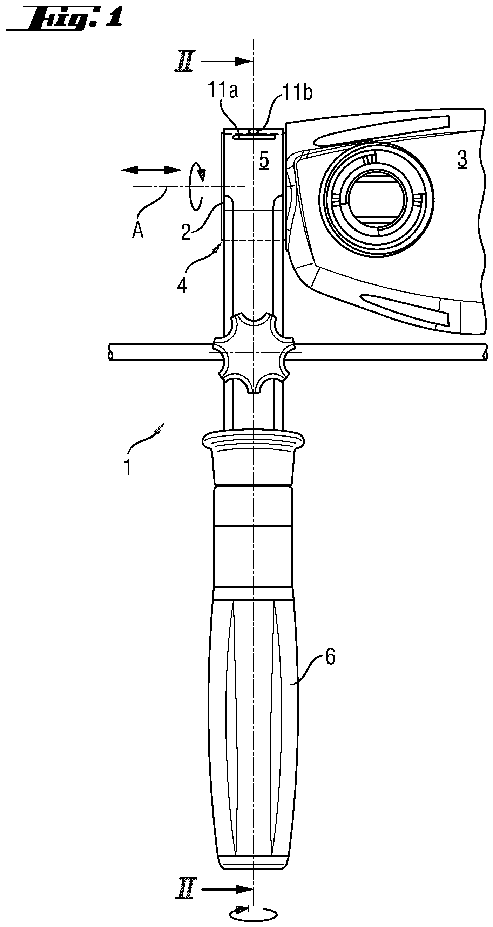

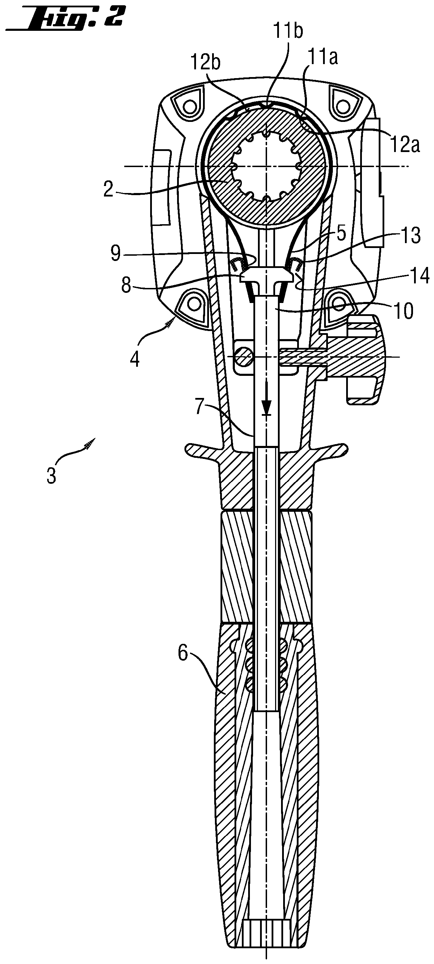

Nach den Fig. 1 und 2 weist ein Zusatzhandgriff 1, der an einem Spannflansch 2 einer nur angedeuteten Handwerkzeugmaschine 3 in Form eines Bohrhammers zur Arbeitsachse A orientiert festgelegt ist, ein zum Spannflansch 2 formschlüssig passendes Kopfteil 4 auf, in welchem ein darin geführtes schlingenförmiges Spannband 5 aus Federstahl vorhanden ist. Das Spannband 5 wird durch manuelle Drehversetzung eines Griffteils 6 verspannt, indem eine Spannschraube 7 mit einem Kopf 8 in Mitnahmeöffnungen 9 an beiden Enden 10 des Spannbandes 5 eingreift. Am Spannband 5 sind an der dem Griffteil 6 gegenüberliegenden Schlinge mehrere nach radial Innen auskragende Nocken 11a, 11b längs versetzt ausgeformt, die formschlüssig in zugeordnete Ausnehmungen 12a, 12b am Spannflansch 2 der Handwerkzeugmaschine 3 eingreifen. Das Spannband 5 weist an den beiden Enden 10 je eine nach radial aussen abragende Führungsnase 13 auf, die beim Verspannen / Entspannen jeweils an im Wesentlichen zueinander parallelen Führungsflächen 14 des Kopfteils 4 geführt werden.

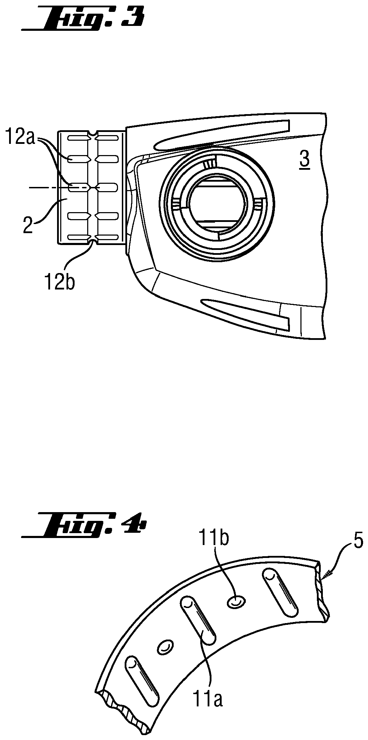

Nach Fig. 3 und Fig. 4 haben die für die radiale Sicherung notwendigen Nocken 11a des Spannbandes 5 die Form von quer zur Schlinge länglichen Quernocken, die in Ausnehmungen 12a in Form von Längsnuten des Spannflansches 2 der Handwerkzeugmaschine 3 eingreifbar sind. Die für die axiale Sicherung notwendigen Nocken 11b haben die Form von kreisförmigen Kugelkappennocken, die in eine Ausnehmung 12b in Form einer umlaufenden Rundnut des Spannflansches 2 eingreifbar sind.

## Patentansprüche

1. Handwerkzeugmaschine mit einem Spannflansch (2) und mit einem daran befestigbaren Zusatzhandgriff (1), der mit seinem Kopfteil (4) zur Arbeitsachse (A) orientiert festlegbar ist, in welchem ein darin geführtes schlingenförmiges Spannband (5) vorhanden ist, das über ein Verspannmittel manuell verspannbar ist,
**dadurch gekennzeichnet, dass**
am Spannband (5) zumindest eine nach radial innen auskragende Nocke (11a, 11b) ausgeformt ist, die in eine zugeordnete Ausnehmung (12a, 12b) des Spannflansches (2) formschlüssig eingreifbar ist,
wobei die zumindest eine nach radial innen auskragende Nocke (11a, 11b) in einer von dem Verspannmittel abgewandten Hälfte des Spannbandes (6) angeordnet sind und in einer dem Verspannmittel zugewandten Hälfte des Spannbandes (6) keine Nocken angeordnet sind.

2. Handwerkzeugmaschine nach Anspruch 1, **dadurch gekennzeichnet, dass** mehrere, längs der Schlinge des Spannbandes (5) versetzte Nocken (11a, 11b) vorhanden sind.

3. Handwerkzeugmaschine nach Anspruch 2, **dadurch gekennzeichnet, dass** zumindest zwei verschiedene Arten von Nocken (11a, 11b) vorhanden sind.

4. Handwerkzeugmaschine nach einem der Ansprüche 1 bis 3, **dadurch gekennzeichnet, dass** das Spannband (5) aus Metall besteht.

5. Handwerkzeugmaschine nach einem der Ansprüche 1 bis 4, **dadurch gekennzeichnet, dass** das Verspannmittel ein drehversetzbares Griffteil (6) ist, das über eine Spannschraube (7) das Spannband (5) verspannt.

6. Handwerkzeugmaschine nach einem der Ansprüche 1 bis 5, **dadurch gekennzeichnet, dass** das Spannband (5) an den beiden Enden (10) je eine Mitnahmeöffnung (9) aufweist, die einen Kopf (8) der Spannschraube (7) formschlüssig umfassen.

7. Handwerkzeugmaschine nach einem der Ansprüche 1 bis 6, **dadurch gekennzeichnet, dass** das Spannband (5) an den beiden Enden (10) je eine nach radial Aussen abragende Führungsnase (13) aufweist.

8. Handwerkzeugmaschine nach Anspruch 7, **dadurch gekennzeichnet, dass** das Kopfteil (4) zwei Führungsflächen (14) ausbildet, an denen die Enden (10) des Spannbandes (5) führbar sind.

## Claims

1. Hand-held machine tool with a clamping flange (2) and with an additional handle (1) that may be fastened to it, which may be fixed with its head part (4) orientated to the working axis (A), in which there is a loop-shaped tension band (5) guided in it, which may be tensioned manually via a means of tensioning,
**characterised in that**
at least one cam (11a, 11b) projecting radially inwards is formed on the tension band (5), which may engage positively in an assigned recess (12a, 12b) of the clamping flange (2),
in which the at least one cam (11a, 11b) projecting radially inwards is arranged in a half of the tension band (6) facing away from the means of tensioning and no cams are arranged in a half of the tension band (6) facing towards the means of tensioning.

2. Hand-held machine tool according to claim 1, **characterised in that** there are several cams (11a, 11b) offset along the loop of the tension band (5).

3. Hand-held machine tool according to claim 2, **characterised in that** there are at least two different types of cams (11a, 11b).

4. Hand-held machine tool according to claims 1 to 3, **characterised in that** the tension band (5) consists of metal.

5. Hand-held machine tool according to one of claims 1 to 4, **characterised in that** the means of tensioning is a grip part (6) that maybe offset rotationally, which tensions the tension band (5) via a tensioning screw (7).

6. Hand-held machine tool according to one of claims 1 to 5, **characterised in that** the tension band (5) has an opening (9) at both ends (10), which surrounds a head (8) of the tensioning screw (7) in a form-fitting way.

7. Hand-held machine tool according to one of claims 1 to 6, **characterised in that** the tension band (5) has a guide nose (13) projecting radially outwards at both ends (10).

8. Hand-held machine tool according to claim 7, **characterised in that** the head part (4) forms two guide surfaces (14), on which the ends (10) of the tension band (5) may be guided.

## Revendications

1. Machine-outil manuelle comportant un flasque de serrage (2) et une poignée auxiliaire (1) pouvant être fixée sur celui-ci, dans laquelle la poignée auxiliaire peut être fixée en orientant sa partie de tête (4) par rapport à l'axe de travail (A), une bande de tension en forme de boucle (5) étant guidée dans celle-ci et pouvant être manuellement mise sous tension par des moyens de serrage,
**caractérisée en ce que**
sur la bande de serrage (5) est formée au moins une came (11a, 11b) faisant radialement saillie vers l'intérieur, qui peut s'engager par complémentarité de formes dans un évidement (12a, 12b) associé du flasque de serrage (2),
dans laquelle la au moins une came (11a, 11b) faisant radialement saillie vers l'intérieur est agencée dans une moitié de la bande de serrage (5) opposée aux moyens de serrage et aucune came n'est agencée dans une moitié de la bande de serrage (5) dirigée vers les moyens de serrage.

2. Machine-outil manuelle selon la revendication 1, **caractérisée en ce qu'**il y a plusieurs cames (11a, 11b) décalées le long des boucles de la bande de serrage (5).

3. Machine-outil manuelle selon la revendication 2, **caractérisée en ce qu'**il y a au moins deux différents types de cames (11a, 11b).

4. Machine-outil manuelle selon l'une des revendications 1 à 3, **caractérisée en ce que** la bande de serrage (5) est en métal.

5. Machine-outil manuelle selon l'une des revendications 1 à 4, **caractérisée en ce que** les moyens de serrage sont une partie de prise rotative (6) qui met sous tension la bande de serrage (5) par l'intermédiaire d'une vis de serrage (7).

6. Machine-outil manuelle selon l'une des revendications 1 à 5, **caractérisée en ce que** la bande de serrage (5) comporte une ouverture de réception (9) aux deux extrémités (10), laquelle ouverture de réception reçoit une tête (8) de la vis de serrage (7) par complémentarité de formes.

7. Machine-outil manuelle selon l'une des revendications 1 à 6, **caractérisée en ce que** la bande de serrage (5) comporte un tenon de guidage (13) faisant radialement saillie vers l'extérieur aux deux extrémités (10) .

8. Machine-outil manuelle selon la revendication 7, **caractérisée en ce que** la partie de tête (4) forme deux surfaces de guidage (14) sur lesquelles les extrémités (10) de la bande de serrage (5) peuvent être guidées.
